# EUROPÄISCHE PATENTSCHRIFT

(11) **EP 4 210 857 B1**
(45) Veröffentlichungstag und Bekanntmachung des Hinweises auf die Patenterteilung: **15.01.2025**
(21) Anmeldenummer: 21766589.2
(22) Anmeldetag: 19.08.2021
(51) Int. Cl.: B01D 46/10, B01D 46/52

(54) **FILTERELEMENT, INNENRAUMLUFTFILTER UND HERSTELLUNGSVERFAHREN**
FILTER ELEMENT, INTERIOR AIR FILTER AND PRODUCTION METHOD
ÉLÉMENT FILTRANT, FILTRE À AIR INTÉRIEUR ET PROCÉDÉ DE PRODUCTION

(30) Priorität: 09.09.2020 DE 102020123461
(43) Veröffentlichungstag der Anmeldung: 19.07.2023
(73) Patentinhaber: MANN+HUMMEL GmbH, 71636 Ludwigsburg (DE)
(72) Erfinder: PEKNY, Peter, 95339 Neuenmarkt (DE)
(74) Vertreter: Mann + Hummel Intellectual Property
(86) Internationale Anmeldenummer: PCT/EP2021/073016
(87) Internationale Veröffentlichungsnummer: WO 2022/053276

(56) Entgegenhaltungen:
- DE-A1- 10 324 681
- DE-A1- 102007 015 662
- FR-A1- 2 812 379
- JP-A- H10 286 421
- US-A1- 2003 159 415
- US-A1- 2004 172 928

## Beschreibung

### Technisches Gebiet

Die vorliegende Erfindung betrifft ein Filterelement. Ferner betrifft die Erfindung einen Innenraumluftfilter mit einem solchen Filterelement. Noch weiterhin betrifft die Erfindung eine Filteranordnung bzw. eine Filtereinrichtung.

Obwohl auf beliebige Filterelemente und -anordnungen anwendbar, werden die vorliegende Erfindung sowie die ihr zugrunde liegende Problematik nachfolgend für einen Innenraumfilter eines Kraftfahrzeugs beschrieben.

Die zunehmende Luftverunreinigung, insbesondere in Großstädten, in Verbindung mit dem Einsatz moderner Klimaanlagen macht es erforderlich, die von außen in den Innenraum eines Kraftfahrzeugs geleitete und aufbereitete bzw. klimatisierte Luft mittels geeigneter Filter zu reinigen. Hierfür kommen beispielsweise Partikelfilter, Geruchsfilter oder deren Kombination miteinander in Betracht, die in der Umgebungsluft enthaltene Schwebstoffe, Partikel und Gerüche möglichst gut herausfiltern bzw. adsorbieren sollen.

Zur Filterung von Luft für den Innenraum eines Kraftfahrzeugs werden häufig gefaltete bzw. plissierte Filtermaterialien, wie etwa Filtervliese, die ein Faltenpack bilden, eingesetzt. Hierzu wird ein zunächst flächiger Filtermaterialbogen zickzackförmig gefaltet. Das Faltenpack wird beispielsweise von Seitenbändern und Kopfbändern oder einem sonstigen Rahmen gehalten. Derartige Filterelemente können in einer Filteraufnahme austauschbar fixiert sein. Die somit gebildete Filteranordnung kann in einer Klimaanlage eines entsprechenden Kraftfahrzeugs installiert sein.

### Stand der Technik

Aus EP 1 434 641 B1 ist ein Filterelement bekannt, bei dem von einem Faltenpack seitlich abstehende Laschen zur Abdichtung gegenüber einem Gehäuse verwendet werden. Dabei werden solche Laschen durch Eingriffsmittel in die Faltentäler gegen das Gehäuse gedrückt. Die DE 10 2004 054 246 A1 offenbart ein Filterelement, bei dem Endfaltenabschnitte eines Faltenpack zwischen Gehäuseteilen verklemmt werden.

Aus DE 103 24 681 A1 ist ein Filterelement mit einem zick-zack-förmig gefalteten Faltenpack bekannt, wobei an mindestens einer zur Faltung parallelen Stirnseite des Faltenpacks ein Abschlusselement vorgesehen ist, das eine Versteifung des Faltenpacks und eine Abdichtung des Filterelementes gegen eine Wandfläche einer Filteraufnahme bewirkt.

### Offenbarung der Erfindung

Vor diesem Hintergrund liegt der vorliegenden Erfindung die Aufgabe zugrunde, ein verbessertes Filterelement und/oder eine Filteranordnung zu schaffen, bei der insbesondere eine randseitige Abdichtung verbessert sein kann.

Demgemäß wird ein Filterelement mit einem Faltenpack aus zickzackförmig gefaltetem Filtermaterial, mit auf Faltprofile des Faltenpacks angebrachten Seitenbändern und mit mindestens einem von dem Faltenpack kopfseitig von einem Endfaltenabschnitt abstehenden Dichtabschnitt vorgeschlagen. Der Dichtabschnitt umfasst mindestens einen Ausschnitt, welcher zur Aufnahme einer korrespondierenden Filtergehäusekontur dient.

Unter Ausschnitt wird eine geschlossene Ausnehmung des Dichtabschnitts verstanden.

Durch den kopfseitig, beispielsweise in einem Winkel, abstehenden Dichtabschnitt wird eine verbesserte Abdichtung gegenüber Gehäuseteilen erzielt, weil die Einschnitte oder Ausschnitte eine erleichterte Befestigung und dadurch Verstärkung und Positionierung der Kopfseite ermöglichen. Im Vergleich zu den längsseitigen Seitenbändern, die durch das Aufbringen auf Faltprofile eine gewisse Stabilität aufweisen, ist es wünschenswert, kopfseitig, also in Richtung der Maschinenrichtung des Faltenpacks, eine verbesserte Abdichtung zu erzielen. Dies ist mit Hilfe der Dichtabschnitte insbesondere ohne zusätzliche filtermaterialfremde Dichteinrichtungen möglich.

Es wird ferner ein Innenraumluftfilter mit einem derartigen Filterelement vorgeschlagen. Als Innenraumluftfilter wird dabei ein Frischluftfilter für den Fahrgastinnenraum eines Kraftfahrzeugs verstanden. Alternativ kann das Filterelement auch in Haushaltsanwendungen, beispielsweise in Küchenabzugshauben, eingesetzt werden. Weitere Anwendungsmöglichkeiten sind weiter unten beschrieben.

In Ausführungsformen ist der winklig abstehende Dichtabschnitt Teil eines an einem Endfaltenabschnitt des Faltenpacks angebrachten Kopfbandes. Als Kopfband wird ein zwischen den Seitenbändern vorliegender flacher, meist aus einem Filtermaterial gebildeter, Abschnitt bezeichnet. Als Dichtabschnitt kann dann eine von dem Kopfband abstehende Lasche verstanden werden.

Alternativ oder zusätzlich kann der Dichtabschnitt durch einen abstehenden Endfaltenabschnitt gebildet sein. Dies hat den Vorteil, dass keine zusätzlichen Fertigungskosten durch das Anbringen des Kopfbandes entstehen.

Der Dichtabschnitt kann beispielsweise bei einem quaderförmigen Filterelement von einer oberseitigen Kante abstehen. Durch die Einschnitte oder Ausschnitte kann eine präzise Aufnahme in einer korrespondierenden Filtergehäusekontur, beispielsweise in der Art von Eingriffselementen, die durch die Ein- oder Ausschnitte hindurchstoßen, erzielt werden. Insbesondere bei mehreren Ein- oder Ausschnitten wird die Kopfseite durch das Zusammenwirken mit den Eingriffselementen des Filtergehäuses zusätzlich gehalten und stabilisiert. Dies führt zu einer verbesserten Abdichtung, beispielsweise durch ein radiales Anpressen des Dichtabschnitts gegenüber einer Dichtfläche des Gehäuses.

In Ausführungsformen umfasst das Filterelement mindestens einen weiteren Dichtabschnitt, welcher sich winklig seitlich von einem der Seitenbänder weg erstreckt. Ein solcher weiterer Dichtabschnitt steht insbesondere von einem der Seitenbänder ab und umfasst auch mindestens einen Einschnitt oder einen Ausschnitt. Der Ein- oder Ausschnitt kann zur Aufnahme einer korrespondierenden Filtergehäusekontur angepasst sein.

In Ausführungsformen hat das Filterelement zwei kopfseitige Dichtabschnitte mit Ein- und/oder Ausschnitten und zwei Dichtabschnitten, welche von den Seitenbändern abstehen und nur optional Ein- oder Ausschnitte aufweisen.

In Ausführungsformen ist der Dichtabschnitt aus einem flachen Materialstreifen gebildet. Als Materialstreifen kommt insbesondere in Ausführungsformen das Filtermaterial infrage. Vorzugsweise ist das Filterelement auch frei von weiteren Dichteirichtungen, insbesondere aus Kunststoffschaummaterialien, wie PUR- oder anderen als Dichtungsmaterialien eingesetzten plastischen Kunststoffen.

In Ausführungsformen ist der Ausschnitt durch ein Loch und/oder eine Ausstanzung in dem Materialstreifen gebildet. Es kommen als Lochgeometrien insbesondere rechteckige, runde oder auch dreieckige Löcher infrage, wobei eine flexible Anpassung an korrespondierende Eingriffselement im Filtergehäuse vorgenommen werden kann.

In Ausführungsformen ist der Dichtabschnitt ein seitlich über eine Breite und/oder Höhe des Faltenpacks überstehender Abschnitt eines auf Faltprofile des Faltenpacks angebrachten Seitenbandes. Der Dichtabschnitt kann zusätzlich oder alternativ ein seitlich über eine Länge und/oder Höhe des Faltenpacks überstehender Abschnitt eines angebrachten Kopfbandes sein. Ferner kann der Dichtabschnitt ein seitlich über eine Länge und/oder Höhe des Faltenpacks überstehender Abschnitt eines Endfaltenabschnitts sein.

In Ausführungsformen hat das Seitenband und/oder das Kopfband ein L-Profil, wobei der kürzere Abschnitt oder Schenkel dem jeweiligen Dichtabschnitt entspricht. Durch den überstehenden Abschnitt kann das Filterelement kopfseitig gegenüber einem Gehäuse aufwandsgünstig abgedichtet werden.

In Ausführungsformen steht der Dichtabschnitt seitlich über eine Höhe des Faltenpacks hinweg von dem Faltenpack ab. Der winklig abstehende Dichtabschnitt kann dabei schräg seitlich und über die Höhe des Faltenpacks hinweg abstehen. Der Dichtabschnitt kann auch umgeschlagen werden, sodass er seitlich federnd gegen eine Gehäusewand drückt.

In Ausführungen kann der Winkel, unter dem der Dichtabschnitt von dem Endfaltenabschnitt absteht, variabel sein, d.h. der Dichtabschnitt weist einen Rotationsfreiheitsgrad gegenüber dem Endfaltenabschnitt auf und ist gewissermaßen gelenkig gelagert. Dies vereinfacht eine Montage am Filtergehäuse insbesondere wenn ein Dichtabschnitt mit Ausschnitt (geschlossene Ausnehmung) vorgesehen ist.

Das Filterelement ist vorzugsweise ausschließlich aus einem Filtermaterial, wie einem Vliesmaterial, und aus einem für die Befestigung der Seiten- und/oder Kopfbänder notwendigen Klebstoffmaterial gebildet. In Ausführungsformen ist das Filterelement frei von zusätzlichen, an das Faltenpack und/oder den Dichtabschnitt angebrachten Dichteinrichtungen, insbesondere aus Gummi oder Kunststoffschäumen.

Es wird darüber hinaus eine Filteranordnung mit einem Filtergehäuse und einem Filterelement, wie zuvor oder im Folgenden beschrieben ist, vorgeschlagen. Das Filterelement ist zumindest teilweise in dem Filtergehäuse aufnehmbar. Man kann auch von einer Filtereinrichtung sprechen.

Das Filtergehäuse umfasst einen Gehäuseteil mit mindestens einem Eingriffselement, welches die zu dem Einschnitt oder Ausschnitt korrespondierende Gehäusekontur bildet.

In Ausführungsformen wirken insofern die Einschnitte oder Ausschnitte in der Art von Löchern oder Kerben mit in der Regel aus Kunststoffmaterialien gefertigten Eingriffselementen des Filtergehäuseteils zusammen. Durch die zueinander korrespondierenden Geometrien im oder am Dichtabschnitt und dem Filtergehäuse ergibt sich zum einen eine verbesserte Positionierung und damit Abdichtung zwischen dem Filterelement und dem Gehäuse, und andererseits kann die Stabilität, insbesondere kopfseitig, verbessert werden. Dadurch, dass entlang der Kopfseite durch die, insbesondere mehreren, Einschnitte und Eingriffselemente eine Befestigung des Filterelements erfolgt, ist es möglich, durch den Dichtabschnitt umgreifende Dichtleisten des Filtergehäuses eine verbesserte Abdichtung zu erzielen. Dabei ist es nicht notwendig, beispielsweise eine Kante des Dichtabschnitts in einen Schlitz einzustecken. Vielmehr kann eine Abdichtung durch das Verpressen des Dichtabschnitts zwischen Gehäuseteilen, insbesondere in axialer Richtung, erzielt werden.

In Ausführungsformen kann das Gehäuseteil eine Dichtleiste umfassen, die gegen den Dichtabschnitt drückt, so dass dieser gegen dieselbe befestigt wird.

In Ausführungsformen kann ein weiterer Gehäuseteil mit einer weiteren Dichtleiste vorgesehen sein. Der Dichtabschnitt ist dann zwischen den Dichtleisten dichtend einspannbar oder verpressbar und wird durch die korrespondierenden Konturen der Einschnitte oder Ausschnitte des Dichtabschnitts mit den Eingriffselementen des Filtergehäuses festgehalten.

In Ausführungsformen kann das oder die Eingriffselemente einen Haken umfassen. Es ist beispielsweise möglich, dass mehrere Öffnungen in dem Dichtabschnitt, welcher winklig absteht, an solchen Haken, welche den Dichtabschnitt durchstoßen, befestigt sind.

Das Filterelement umfasst beispielsweise ein Filtermaterial und ein oder mehrere Stabilisierungselemente, insbesondere in der Art der Seitenbänder und/oder Kopfbänder (auch als Stirnbänder bezeichnet), welche das Filtermaterial zumindest abschnittsweise stabilisieren, um dessen Form, insbesondere im Filterbetrieb, aufrechtzuerhalten. Die Stabilisierungselemente, insbesondere die Seiten und Kopfbänder, können dabei einen geschlossenen oder offenen Rahmen - auch materialeinstückig - ausbilden, welcher das Filtermaterial umgibt.

Vorzugsweise umfasst das Filterelement für das Faltenpack zwei Kopfbänder und zwei Seitenbänder, die mit dem Faltenpack, insbesondere stoffschlüssig, verbunden sind und dieses rahmenförmig als Dichtabschnitte umschließen. Die Seiten- und Kopfbänder sind z. B. aus einem Vliesmaterial, insbesondere einem Filtervlies, Filtergewebe oder Filtergelege gebildet. Das Vliesmaterial der Seiten- und Kopfbänder kann insbesondere eine geringere Luftdurchlässigkeit als das Filtermedium aufweisen und/oder eine höhere Biegesteifigkeit als das Filtermedium aufweisen.

Das Filtermaterial kann gefaltet oder wellenförmig ausgebildet sein. Als Faltungen sind beispielsweise Zickzack- oder W-Faltungen bekannt. Das Filtermaterial kann geprägt und anschließend an Prägekanten unter Ausbildung von Faltkanten scharfkantig gefaltet sein. Als Ausgangsmaterial kann ein flächiger Materialfilterbogen dienen, welcher entsprechend umgeformt wird. Das Filtermaterial ist beispielsweise ein Filtergewebe, ein Filtergelege oder ein Filtervlies. Insbesondere kann das Filtermaterial in einem Spinnvlies- oder Meltblownverfahren hergestellt sein. Weiter kann das Filtermedium verfilzt oder genadelt sein. Das Filtermaterial kann Naturfasern, wie Baumwolle, oder Kunstfasern, beispielsweise aus Polyester, Polyphenylsulfid oder Polytetrafluorethylen, aufweisen. Die Fasern können bei der Verarbeitung in, schräg und/oder quer zur Maschinenrichtung orientiert sein.

Das Filtermaterial kann ein- oder mehrlagig sein. Es kann ferner ein Adsorptionsmittel, wie etwa Aktivkohle, aufweisen. Weiterhin kann das Filtermaterial eine antimikrobielle und/oder antiallergene Wirkung aufweisen. Als antimikrobieller Stoff kommt beispielsweise Zink-Pyrithion oder Nanosilber, als antiallergener Stoff beispielsweise Polyphenol in Betracht.

Ein entsprechendes Filterelement dient der Filterung von Fluiden, also gasförmigen und/oder flüssigen Medien, beispielsweise Luft. Ein gasförmiges Medium bzw. Luft umfasst hier auch Gas- bzw. Luft-Feststoffgemische und/oder Gas- bzw. Luft-Flüssigkeitsgemische. Beispielsweise kann eine Klimaanlage das Filterelement aufweisen.

Ein insbesondere offenes Filtermaterial kann dazu eingerichtet sein, Partikel des Teststaubs A4 nach ISO 12103-1 aus einem Luftstrom mit einer Filtrationsgeschwindigkeit von 0,10 bis 0,30 m/s, bezogen auf die Filtermedienfläche, bei einer Luftdurchlässigkeit von größer 3000 l/m²s (bestimmt gemäß ISO 9237 bei 200 Pa) zu entfernen. Die Ermittlung der Filtrationskennwerte kann beispielsweise gemäß DIN 71460-1 erfolgen.

Ein insbesondere hochabscheidendes Filtermaterial kann dazu eingerichtet sein, Partikel des Teststaubs A2 nach ISO 12103-1 sowie NaCl-Aerosolpartikel gemäß DIN 71460-1 aus einem Luftstrom mit einer Filtrationsgeschwindigkeit von 0,10 bis 0,30 m/s, bezogen auf die Filtermedienfläche, bei einer Luftdurchlässigkeit von größer 600 l/m²s (bestimmt gemäß ISO 9237 bei 200 Pa) zu entfernen. Die Ermittlung der Filtrationskennwerte kann beispielsweise gemäß DIN 71460-1 erfolgen.

In Ausführungsformen ist das Filtermaterial als ein synthetisches Medium mit Mehrlagenaufbau gefertigt. Eine Grammatur des Filtermaterials beträgt vorzugsweise 50 - 150 g/m².

Das Filtermaterial entspricht vorzugsweise einer Effizienzklasse von E10 - H14 nach DIN EN 1822-3 in der Fassung zum Anmeldetag dieser Anmeldung.

In Varianten beträgt der Faltenabstand weniger als 5 mm. Denkbar ist eine Ausführung des Filterelements als HEPA-Filter. Eine Materialdicke des Filtermaterials, insbesondere eines HEPA-Filtermaterials ist beispielsweise zwischen 0,2 mm und 1 mm. In anderen Ausführungsformen können auch deutlich dickere Filtermaterialien zum Einsatz kommen, etwa so genannte Kombifiltermedien, die neben zumindest einer Partikelfilterlage eine Gasadsorptionsfilterlage aufweisen. Die Dicke kann hier bis zu 2 mm, oder sogar bis zu 3 mm betragen. Entsprechend sind dann auch die Faltenabstände größer zu wählen, insbesondere größer als 5 mm.

Das Filterelement bzw. kann in Personenkraftwagen, Lastkraftwagen, Baumaschinen, Wasserfahrzeugen, Schienenfahrzeugen, Luftfahrzeugen sowie allgemein in der Klimatechnik, insbesondere in Heiz-Klimageräten, in Haushaltsgeräten, in Brennstoffzellen oder in der Gebäudetechnik Anwendung finden. Diese Kraftwagen oder Fahrzeuge können elektrisch und/oder mittels Kraftstoff (insbesondere Benzin oder Diesel) betrieben werden. Im Hinblick auf die Gebäudetechnik kommen insbesondere stationäre Anlagen zur Behandlung von Luft in Betracht.

Noch weiterhin betrifft die Erfindung ein Fahrzeug mit einer solchen Filteranordnung.

Die für das Filterelement beschriebenen Merkmale gelten für den Innenraumluftfilter, die Filteranordnung sowie das Fahrzeug entsprechend, und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmale oder Verfahrensschritte. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
Fig. 1: eine schematische Darstellung eines allgemeinen Kraftfahrzeugs mit einem Innenraumluftfilter;
Fig. 2: eine perspektivische Darstellung eines Filtermaterials;
Fig. 3: eine schematische Ansicht eines Filterelements gemäß einer Ausführungsform;
Fig. 4: eine perspektivische Ansicht einer ersten Ausführungsform einer Filteranordnung in einer Explosionsdarstellung;
Fig. 5: eine perspektivische Ansicht der ersten Ausführungsform in zusammengesetztem Zustand und einem Aufriss;
Fig. 6: eine Schnittansicht der ersten Ausführungsform und Detailausschnitte;
Fig. 7: eine perspektivische Ansicht einer zweiten Ausführungsform einer Filteranordnung in einer Explosionsdarstellung; und
Fig. 8: eine Seitenansicht mit einem randseitigen Aufriss aus Fig. 7.

### Ausführungsform(en) der Erfindung

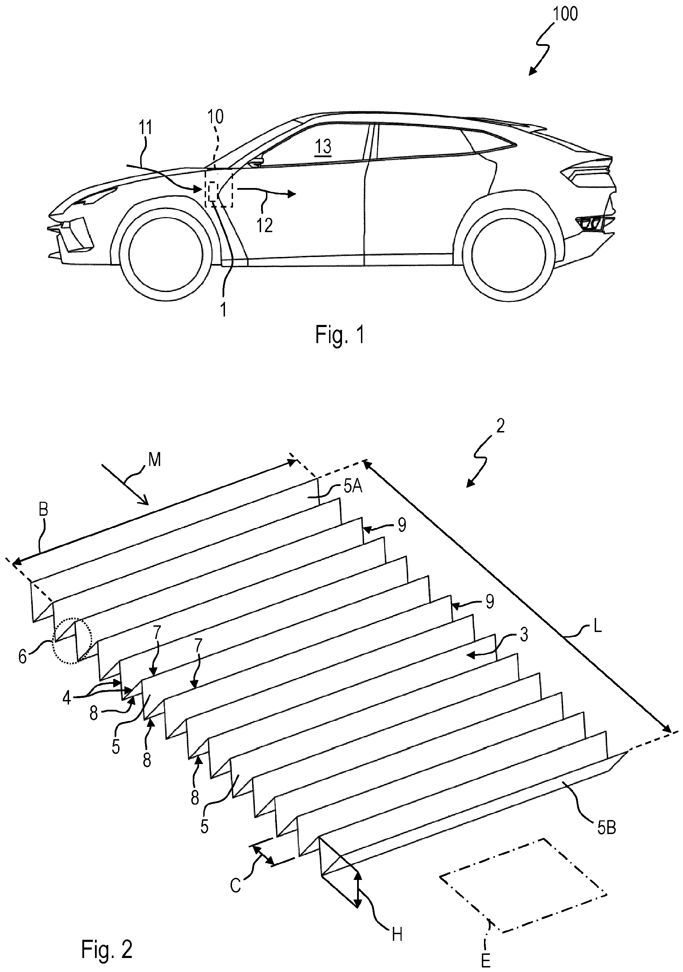

Fig. 1 zeigt ein Kraftfahrzeug 100 mit einer Klimaanlage, die eine Filteranordnung 10 umfasst. Beispielsweise kann die Klimaanlage als Heiz-Klimaanlage ausgebildet sein. Die Klimaanlage bzw. die Filteranordnung 10 nimmt Außenluft 11 auf und führt gefilterte Luft 12 einer Kabine 13 (auch als Fahrgastraum bezeichnet) des Kraftfahrzeugs 100 zu. Das Filtern erfolgt über ein als einen Innenraumluftfilter ausgebildetes Filterelement 1.

Fig. 2 zeigt ein gefaltetes Filtermaterial 3 isoliert und kann in der dargestellten Form als ein Faltenpack 2 bezeichnet werden. Das Filtermaterial 3 ist beispielsweise ein Filtervlies, Filtergewebe, Filtergelege oder Filterfilz, insbesondere ein Nadelfilz. Insbesondere kann das Filtermaterial 3 in einem Meltblown-Verfahren hergestellt sein. Das Filtermaterial 3 kann Naturfasern, wie Baumwolle, oder Kunstfasern, beispielsweise aus Polyester, Polyphenylsulfid oder Polytetrafluorethylen, aufweisen. Die Fasern können bei der Verarbeitung in, schräg und/oder quer zur Maschinenrichtung M orientiert sein. Auch können die Fasern in einer Raumrichtungen gestreckt sein. Das Filtermaterial 3 kann ein- oder mehrlagig ausgebildet sein.

Das Filtermaterial 2 umfasst zur Bildung des Faltenpacks 2 Falten 6 auf, welche sich typischerweise quer zur Maschinenrichtung M erstrecken. Das gefaltete Filtermaterial 2 wird auch als Plissee bezeichnet. Die Falten 6 können mittels Faltens entlang scharfer Faltkanten 7, 8 (auch als Faltenspitzen bezeichnet) oder durch eine wellenförmige Ausführung des Filtermaterials 2 erzeugt werden. Man erkennt in Fig. 2 obere Faltkanten 7 und in der Orientierung der Fig. 2 unterseitige Faltkanten 8. Eine jeweilige Falte 6 kann durch zwei benachbarte Faltabschnitte 5 definiert sein, welche über eine entsprechende Faltkante 8 miteinander verbunden sind. Die Faltung ist als Zick-Zack-Faltung ausgeführt. Es ergibt sich insofern ein zickzackförmiges Faltprofil 4, 9 and den Seiten des Faltenpacks 2.

Auch eine Faltung, bei welcher die Falten 6 eine variierende Höhe H aufweisen, ist möglich. Ferner kann der Faltenabstand C zwischen den Falten 6 bzw. benachbarten Faltkanten 7, 8 gleicher Faltorientierung variieren. Das Filtermaterial 2 kann selbsttragend ausgeführt sein, d.h. die Falten 6 sind bei einer bestimmungsgemäßen Durchströmung im Filterbetrieb formstabil.

Das Filtermaterial 3 wird in Maschinenrichtung M von Endfaltenabschnitten 5A, 5B begrenzt. Quer dazu wird das Filtermaterial 9 von seitlichen Faltenstirnkanten (auch als Faltenprofile 4, 9 bezeichnet) begrenzt. Mit "Faltenstirnkante" ist die seitliche Kante des Filtermaterials 3 an der Seite des Faltenpacks 2 gemeint, welche sich zwischen benachbarten Faltkanten 7, 8 einer jeweiligen Falte 6 erstreckt.

Das Filtermaterial 3 kann in der Draufsicht, also in der Ebene E seiner flächigen Erstreckung, eine rechteckige Gestalt aufweisen. Allerdings ist auch eine dreieckige, fünf- oder mehreckige, runde oder ovale Gestalt denkbar.

In der Darstellung der Fig. 2 ist eine Länge L des Faltenpacks 2 entlang der Maschinenrichtung M und quer zu den Faltkanten 7, 8 angedeutet. Entlang der Faltkanten 7, 8 und quer zur Maschinenrichtung M ist üblicherweise eine Breite B des Faltenpacks 2 angegeben. Als radiale Richtung wird hier eine Richtung in der Ebene E verstanden, und eine axiale Richtung steht senkrecht dazu, also im Wesentlichen enlang der Durchströmungsrichtung.

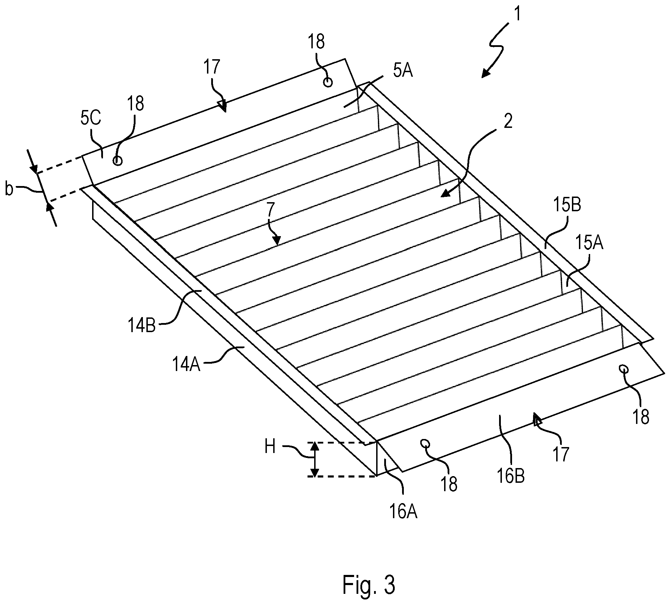

Zur Herstellung eines Filterelementes, beispielsweise eines Innenraumluftfilterelementes, wird an das in Fig. 2 dargestellte Faltenpack 2 ein umlaufendes Rahmenelement angebracht. In Fig. 3 ist das aus Fig. 2 dargestellte Faltenpack 2 mit oberseitigen Faltkanten 7 angedeutet. Auf die Faltprofile 4, 9 sind Seitenbänder 14, 15 angebracht. Die Seitenbänder 14, 15 haben jeweils ein L-Profil mit einem Abschnitt 14A, 15A, der an die Faltprofile 4, 9 beispielsweise angeklebt ist, und einen seitlich abstehenden Schenkel 14B, 15B. Die seitlich abstehenden Seitenbandabschnitte bzw. Schenkel 14B, 15B dienen als Dichtabschnitte zur seitlichen Abdichtung gegenüber Gehäuseflächen. Die in der Orientierung der Fig. 2 senkrechten Schenkel 14A, 15A ensprechen der Höhe H des Faltenpacks 2.

An der Kopfseite, in der Orientierung der Fig. 3 nach vorne rechts gerichtet, ist das Faltenpack 2 mit einem Kopfband 16 abgeschlossen. Das Kopfband 16 umfasst wiederum einen Abschnitt oder Schenkel 16A, der der Höhe H des Faltenpacks 2 entspricht, und einen seitlich und winklig abstehenden Schenkel 16B als Dichtabschnitt. An dem dem Kopfband 16 gegenüberliegenden Kopfabschnitt des Faltenpacks 2, der in der Orientierung der Fig. 3 oben links angedeutet ist, hat der Endfaltenabschnitt 5A einen über die Höhe H und die Länge L des Faltenpacks 2 hinausgehenden abstehenden Schenkel 5C als Dichtabschnitt. Der Schenkel 5C ist von dem Endfaltenabschnitt 5A durch eine Faltkante getrennt.

Während die Seitenbänder mit den auf die Faltprofile 6 angebrachten Abschnitten 14a, 15a und die abgewinkelten Dichtabschnitte 14B, 15B recht stabil sind, haben die kopfseitigen Bänder oder Dichtabschnitte 5C, 16B vom Faltenpack 2 her eine geringere Stabilisierung. Als Stabilisierung dient im Wesentlichen die Faltkante, über die der Dichtabschnitt 5C, 16B von der jeweiligen Endfalte 5A oder dem Kopfbandabschnitt 16A absteht. Um eine verbesserte Positionierung und Befestigung oder Lagerung des winklig abstehenden Dichtabschnitts 5C, 16B zu erzielen, sind die Dichtabschnitte 5C, 16C mit Ausstanzungen 17, 18 versehen.

Dabei sind jeweils zwei Löcher 18 in dem Dichtabschnitt 5C, 16B und eine mittlere Kerbe 17 vorgesehen. In diese Einschnitte 17 bzw. Ausschnitte 18 können korrespondierende Eingriffselemente eines Gehäuses eingreifen. Zum einen wird dadurch eine verbesserte Positionierung und Befestigungs des gesamten Filterelements erzielt, und zum anderen kann in der Art eines Schlüssel-Schloss-Prinzips der Einsatz von ungeeigneten Filterelementen mit unpassenden Konturen bzw. Ein-/Ausschnitten verhindert werden. Dadurch wird die Betriebssicherheit beispielsweise des Kraftfahrzeugs, in dem ein entsprechendes Filterelement 1 eingesetzt werden soll, erhöht werden. Weitere nicht explizit dargestellte Ausführungsformen haben kopfbandseitig entweder winklig abstehende Dichtabschnitte 16B als Teil des Kopfbandes 16 oder entsprechend eingerichtete Endfaltenabschnitte 5C.

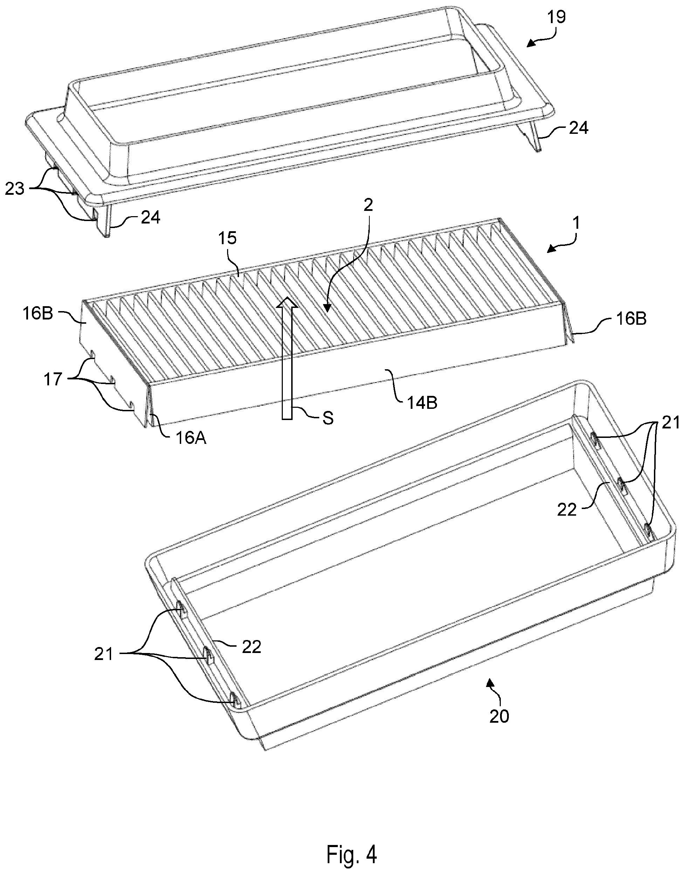

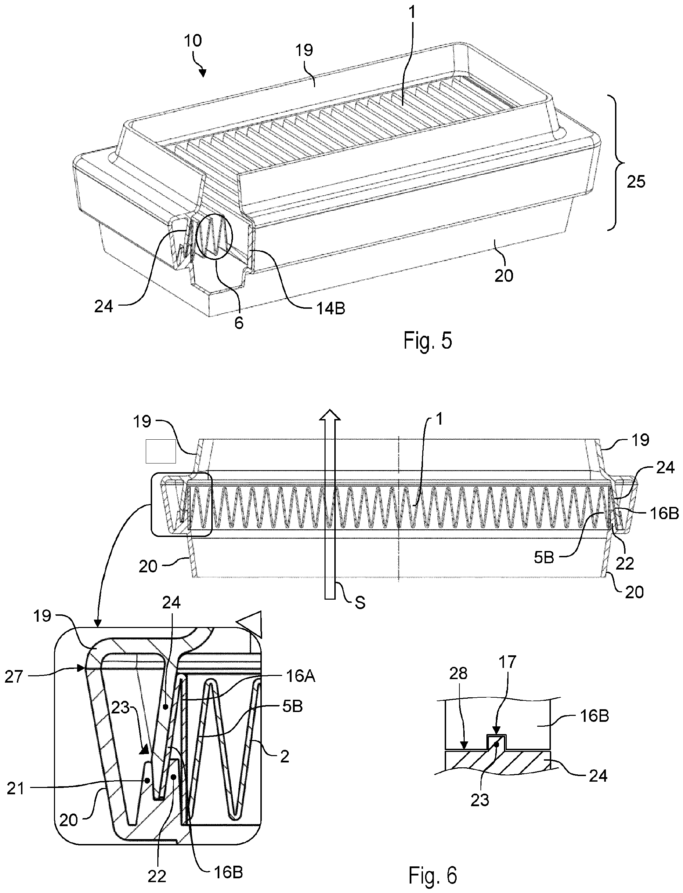

In Fig. 4, 5 und 6 ist eine erste Ausführungsform einer Filteranordnung 10 erläutert. Dabei zeigt Fig. 4 eine perspektivische Ansicht in einer Explosionsdarstellung mit einem Filtergehäuse aus zwei Gehäuseteilen 19, 20 und einem darin aufnehmbaren Filterelement 1. Fig. 5 zeigt die Filteranordnung bzw. Filtereinrichtung 10 im zusammengesetzten Zustand, und Fig. 6 Schnittdarstellungen.

Man erkennt in Fig. 4 und 5 ein aus zwei Gehäuseteilen 19, 20 zusammensetzbares Filtergehäuse 25. Das Filtergehäuse 25 ist rahmenförmig aufgebaut und geeignet, ein quaderförmiges Filterelement 1 aufzunehmen. Das Filterelement 1 hat dabei ein Faltenpack 2, in Fig. 4 sichtbare Seitenbänder, von denen nur das vordere 14B mit einem Bezugszeichen bezeichnet ist, und zwei Kopfbänder 16 (16A, 16B), wobei winklig abstehende Abschnitte, welche radial umgeschlagen sind, als Dichtabschnitte 16B vorliegen. Die Dichtabschnitte 16B haben jeweils drei Einkerbungen 17, die eine Viereckform haben.

Die Dichtabschnitte 16B sind dabei aus Filtermaterial gefertigt und als Laschen oder Streifen implementiert. Der in der Orientierung der Fig. 4 untere Gehäuseteil 20 umfasst kopfbandseitig des Filterelementes 1 zwei Dichtleisten 22 und auf jeder Seite der jeweiligen Dichtleiste 22 gegenüberliegende Halteelement 21. Das obere Gehäuseteil 19 hat ebenfalls zwei für die Kopfbandseiten vorgesehene Dichtleisten 24, die durch nach innen gerichtete Auskragungen gebildete Eingriffselemente 23 umfassen.

Im zusammengesetzten Zustand, wie es in Fig. 6 dargestellt ist, werden die oberen Dichtleisten 24 zwischen die untere Dichtleiste 22 und die Halteelemente 21 geführt. Die Halteelemente 21 korrespondieren zu den Eingriffselementen 23 der oberen Dichtleiste 24, so dass die Auskragungen 23 in die als Ausstanzung implementierten Ausschnitte 17 des Dichtabschnitts 16B greifen. In Fig. 6 unten links ist eine Ausschnittdarstellung abgebildet, bei der der Schnitt durch einen Bereich führt, in dem die Dichtleiste 24 bzw. deren nach radial innen gerichteten Auskragungen nicht direkt zu sehen sind. Man erkennt in der Schnittansicht der Fig. 6, unten links, dass der als Dichtabschnitt fungierende Kopfbandabschnitte 16B zwischen der Dichtleiste 22 des unteren Gehäuseteils 20 und der Dichtleiste 24 des oberen Gehäuseteils 19 jedenfalls im unteren Bereich eingespannt ist und abdichtet.

Darüber hinaus führt der Eingriff der Auskragungen 23 der oberen Dichtleiste 24, wie es in Fig. 6, unten rechts, gezeigt ist, in die korrespondierenden Konturen der Ausstanzung 17 zu einer in der Orientierung der Fig. 6 horizontalen Verschiebesicherheit des Dichtabschnitts 16B. Außerdem wird verhindert, dass eine falsche Einbauposition des Filterelementes innerhalb des Gehäuses auftritt. In der Darstellung der Fig. 6 ist von einer äußeren Kante 28 des Dichtabschnitts 16B ein rechteckiger Einschnitt oder eine Ausstanzung 17 vorgenommen. In der Darstellung der Fig. 4 sieht man, dass jeweils drei solcher Ausschnitte oder Einschnitte 17 am jeweiligen Dichtabschnitt 16B vorgesehen sind. Im eingebauten Zustand ist der Dichtabschnitt 16B im Wesentlichen so umgeschlagen, dass er entlang der Durchströmungsrichtung S verläuft. Dabei kann die Breite des Dichtabschnitts 16B an die Gehäusekonstruktion jeweils angepasst werden.

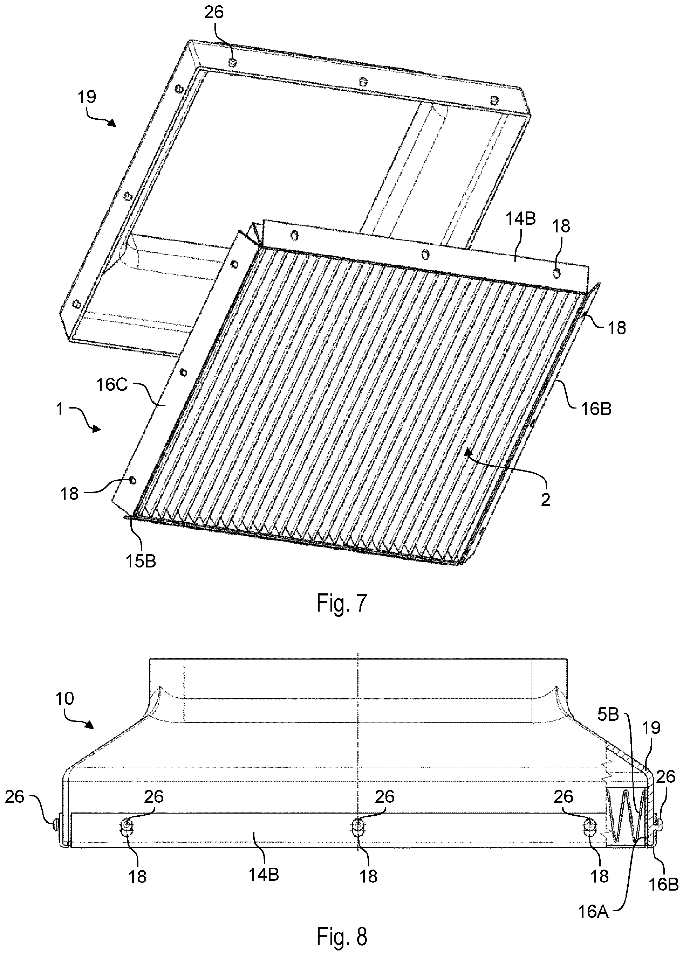

Fig. 7 und 8 zeigen eine zweite Ausführungsform einer Filteranordnung mit um ein Faltenpack 2 umlaufenden Dichtabschnitten. Fig. 7 zeigt eine perspektivische Explosionsansicht und Fig. 8 eine Seitenansicht mit einem randseitigen Aufriss. In der Ausführungsform gemäß Fig. 7 und 8 hat das Filterelement 1 einen quadratischen Grundriss, und das Faltenpack 2 ist mit Seiten- und Kopfbändern versehen. Sowohl die Seitenbänder 14B, 15B haben einen seitlich winklig abstehenden Abschnitt als Dichtabschnitt 14B, 15B als auch die Kopfbänder 16B, 16C. Die als Dichtabschnitte fungierenden Laschen oder Streifen 14B, 15B, 16B, 16C sind mit Löchern 18 versehen, welche an als Haken 26 ausgebildete Eingriffselemente des Gehäuseteils 19 angebracht werden können.

Das Gehäuseteil 19 hat einen die äußere Kontur des Filterelements umlaufenden Rahmen mit nach außen gerichteten Haken 26. In Fig. 8 erkennt man im eingebauten Zustand, wie der jeweilige Dichtabschnitt 14B, 16B um die Gehäusekante umgeschlagen ist und von außen über die Haken 26 mittels der Löcher 18 befestigt ist. Dabei durchstößt der jeweiligen Haken 26 das Loch des Dichtabschnitts 16B, 16C, 14B, 15B. Es sind nicht alle Haken und Öffnungen mit Bezugszeichen versehen.

In der Variante der Fig. 7 und 8 dient der Gehäuserand auch als Dichtleiste von innen gegen die durch die Befestigung mittels der Halteelemente 26 gesicherten Seitenband- und Kopfbandabschnitte 16A und von außen gegen die Dichtabschnitte 16B (vgl. Fig. 8, unten rechts). Dadurch wird randseitig eine gute Abdichtung ohne zusätzliche Dichtmittel herbeigeführt.

Durch korrespondierende Konturen durch Ein- oder Ausschnitte am Dichtabschnitt des Filterelements einerseits und dem das Filterelement aufnehmenden Gehäuse andererseits wird insbesondere kopfbandseitig eine gute Abdichtung, Positionierung und Stabilisierung des Filterelements erzielt. Obwohl in der Beschreibung bestimmte Geometrien von korrespondierenden Konturen der Ein- oder Ausschnitte und Eingriffselemente erläutert sind, können diese an die jeweilige Einbausituation angepasst werden. Bevorzugt sind pro Seite des Filterelements kopfbandseitig mindestens zwei solcher Ein-/ Ausschnitte vorgesehen.

### Bezugszeichen

- 1: Filterelement/Innenraumluftfilter
- 2: Faltenpack
- 3: Filtermaterial
- 4: Faltprofil
- 5: Faltabschnitt
- 5A, 5B: Endfaltenabschnitt
- 5C: Rahmenelement
- 6: Faltung
- 7, 8: Faltkante
- 9: Faltprofil
- 10: Filtereinrichtung/Filteranordnung
- 11: Rohluft
- 12: gefilterte Luft
- 13: Kabine
- 14 (14A, 14B): Seitenband
- 15 (15A, 15B): Seitenband
- 14B, 15B: Rahmenelement
- 16 (16A, 16B): Kopfband
- 17: Einschnitt
- 18: Ausschnitt (Loch)
- 19, 20: Gehäuseteil
- 21: Halteelement
- 22: Dichtleiste
- 23: Eingriffselement
- 24: Dichtleiste
- 25: Gehäuse
- 26: Haken
- 27: Gehäusetrennung
- 28: Kante
- 100: Fahrzeug
- b: Überstand
- B: Breite
- C: Faltenabstand
- E: Ebene
- H: Höhe
- L: Länge
- M: Maschinenrichtung
- S: Durchströmrichtung

## Patentansprüche

1. Filterelement (1) mit einem Faltenpack (2) aus zickzackförmig gefaltetem Filtermaterial (3), mit auf Faltprofile (4) des Faltenpacks (2) angebrachten Seitenbändern (14, 15), und mit mindestens einem von dem Faltenpack (2) kopfseitig von einem Endfaltenabschnitt (5A, 16A) winklig abstehenden Dichtabschnitt (5C, 16B), wobei der Dichtabschnitt (5C, 16B) mindestens einen Ausschnitt (18) in Form einer geschlossenen Ausnehmung zur Aufnahme einer korrespondierenden Filtergehäusekontur (23, 26) umfasst.

2. Filterelement nach Anspruch 1, wobei der Dichtabschnitt (5C, 16B) Teil eines an einem Endfaltenabschnitt (5B) des Faltenpacks (2) angebrachten Kopfbandes (16A, 16B) oder durch einen abstehenden Endfaltenabschnitt (5C) gebildet ist.

3. Filterelement nach Anspruch 1 oder 2, ferner mit mindestens einem weiteren Dichtabschnitt (14B), welcher seitlich winklig von einem der Seitenbänder (14, 15) absteht und insbesondere mindestens einen Einschnitt (17) oder Ausschnitt (18), insbesondere zur Aufnahme einer korrespondierenden Filtergehäusekontur (23, 26), umfasst.

4. Filterelement nach einem der Ansprüche 1 - 3, wobei der Dichtabschnitt (5C, 16B) aus einem flachen Materialsteifen gebildet ist und der Ausschnitt (18) durch ein Loch und/oder eine Ausstanzung in dem Materialstreifen gebildet ist.

5. Filterelement nach einem der Ansprüche 1 - 4, wobei der Dichtabschnitt (5C, 16B) ein seitlich über eine Breite (B) und/oder Höhe (H) des Faltenpacks (2) überstehender Abschnitt (14B, 15B) eines auf Faltprofile (4) des Faltenpacks (2) angebrachten Seitenbandes (14, 15), ein seitlich über eine Länge (L) und/oder Höhe (H) des Faltenpacks (2) überstehender Abschnitt (16B) eines angebrachten Kopfbandes (16) oder ein seitlich über eine Länge (L) und/oder Höhe (H) des Faltenpacks (2) überstehender Abschnitt (5C) eines Endfaltenabschnitts (5A) ist.

6. Filterelement nach einem der Ansprüche 1 - 3, wobei der Dichtabschnitt (5C, 16B) aus dem Filtermaterial gebildet ist.

7. Filterelement nach einem der Ansprüche 1 - 6, wobei der Winkel, unter dem der Dichtabschnitt (5C, 16B) von dem Endfaltenabschnitt (5A, 16A) absteht, variabel ist.

8. Filteranordnung (10) mit einem Filtergehäuse (25) und einem Filterelement (1) nach einem der Ansprüche 1 - 7, das zumindest teilweise in das Filtergehäuse (25) aufnehmbar ist, wobei das Filtergehäuse einen Gehäuseteil (19) mit mindestens einem Eingriffselement (23, 26) umfasst, welches die korrespondierende Gehäusekontur bildet.

9. Filteranordnung (10) nach Anspruch 8, wobei der Gehäuseteil (19) eine Dichtleiste (24) umfasst, gegen die der Dichtabschnitt (5C, 16B) befestigt ist.

10. Filteranordnung (10) nach Anspruch 8 oder 9, wobei das Filtergehäuse (25) einen weiteren Gehäuseteil (20) mit einer weiteren Dichtleiste (22) umfasst, wobei der Dichtabschnitt (5C, 16B) zwischen den Dichtleisten (22, 24) dichtend einspannbar ist.

11. Filteranordnung (10) nach einem der Ansprüche 8 - 10, wobei das Eingriffselement einen Haken umfasst.

## Claims

1. A filter element (1) having a pleated pack (2) made of filter material (3) folded in a zigzag shape, having sidebands (14, 15) attached to folding profiles (4) of the pleated pack (2), and having at least one sealing section (5C, 16B) projecting at an angle from the pleated pack (2) at the head side of an end fold section (5A, 16A), wherein the sealing section (5C, 16B) comprises at least one cutout (18) in the shape of a closed recess for accommodating a corresponding filter housing contour (23, 26).

2. The filter element according to claim 1, wherein the sealing section (5C, 16B) is part of a headband (16A, 16B) attached to an end fold section (5B) of the pleated pack (2) or is made of a projecting end fold section (5C).

3. The filter element according to claim 1 or 2, furthermore having at least one additional sealing section (14B), which projects laterally at an angle from one of the sidebands (14, 15) and in particular comprises at least one indentation (17) or cutout (18), in particular for accommodating a corresponding filter housing contour (23, 26).

4. The filter element according to one of the claims 1 to 3, wherein the sealing section (5C, 16B) is formed from a flat material strip and the cutout (18) is formed through a hole and/or a punching in the material strip.

5. The filter element according to one of the claims 1 to 4, wherein the sealing section (5C, 16B) is a section (14B, 15B) of a sideband (14, 15) attached to folding profiles (4) of the pleated pack (2) protruding laterally over a width (B) and/or height (H) of the pleated pack (2), a section (16B) of an attached headband (16) protruding laterally over a length (L) and/or height (H) of the pleated pack (2) or a section (5C) of an end fold section (5A) protruding laterally over a length (L) and/or height (H) of the pleated pack (2).

6. The filter element according to one of the claims 1 to 3, wherein the sealing section (5C, 16B) is formed of the filter material.

7. The filter element according to one of the claims 1 to 6, wherein the angle under which the sealing section (5C, 16B) projects from the end fold section (5A, 16A) is variable.

8. A filter assembly (10) having a filter housing (25) and a filter element (1) according to one of the claims 1 to 7, which is at least partially accommodatable in the filter housing (25), wherein the filter housing comprises a housing component (19) having at least one engagement element (23, 26) that forms the corresponding housing contour.

9. The filter assembly (10) according to claim 8, wherein the housing component (19) comprises a sealing strip (24) to which the sealing section (5C, 16B) is attached.

10. **The** filter assembly (10) according to claim 8 or 9, wherein the filter housing (25) comprises a further housing component (20) having a further sealing strip (22), wherein the sealing section (5C, 16B) is sealingly clampable between the sealing strips (22, 24).

11. The filter assembly (10) according to one of the claims 8 to 10, wherein the engagement member comprises a hook.

## Revendications

1. Élément filtrant (1) ayant un ensemble de plis (2) constitué d'un matériau filtrant plié en accordéon (3), ayant des bandes latérales (14, 15) montées sur des profils de plis (4) de l'ensemble de plis (2) et ayant au moins une section d'étanchéité (5C, 16B) faisant saillie en équerre de l'ensemble de plis (2) du côté tête d'une section de pli d'extrémité (5A, 16A), la section d'étanchéité (5C, 16B) comprenant au moins une découpe (18) en forme d'évidement fermé destinée à réceptionner un contour de boîtier de filtre (23, 26) correspondant.

2. Élément filtrant selon la revendication 1, la section d'étanchéité (5C, 16B) étant une partie d'une bande frontale (16A, 16B) montée sur une section de pli d'extrémité (5B) de l'ensemble de plis (2) ou étant formée par une section de pli d'extrémité (5C) en saillie.

3. Élément filtrant selon la revendication 1 ou 2, en outre ayant au moins une autre section d'étanchéité (14B) qui, latéralement, fait saillie en équerre d'une des bandes latérales (14, 15) et comprend notamment au moins une entaille (17) ou une découpe (18), notamment pour réceptionner un contour de boîtier de filtre (23, 26) correspondant.

4. Élément filtrant selon l'une quelconque des revendications 1 à 3, la section d'étanchéité (5C, 16B) étant constituée d'une bande de matériau plate et la découpe (18) étant formée par un trou et/ou une partie découpée dans la bande de matériau.

5. Élément filtrant selon l'une quelconque des revendications 1 à 4, la section d'étanchéité (5C, 16B) étant une section (14B, 15B) latéralement en saillie sur une largeur (B) et/ou une hauteur (H) de l'ensemble de plis (2) d'une bande latérale (14, 15) montée sur des profils de plis (4) de l'ensemble de plis (2), une section (16B) latéralement en saillie sur une longueur (L) et/ou une hauteur (H) de l'ensemble de plis (2) d'une bande frontale (16) montée ou une section (5C) latéralement en saillie sur une longueur (L) et/ou une hauteur (H) de l'ensemble de plis (2) d'une section de pli d'extrémité (5A).

6. Élément filtrant selon l'une quelconque des revendications 1 à 3, la section d'étanchéité (5C, 16B) étant constituée du matériau filtrant.

7. Élément filtrant selon l'une quelconque des revendications 1 à 6, l'angle selon lequel la section d'étanchéité (5C, 16B) fait saillie de la section de pli d'extrémité (5A, 16A) étant variable.

8. Agencement de filtre (10) ayant un boîtier de filtre (25) et un élément filtrant (1) selon l'une quelconque des revendications 1 à 7 qui peut être logé, au moins partiellement, dans le boîtier de filtre (25), le boîtier de filtre comprenant un composant de boîtier (19) ayant au moins un élément d'engagement (23, 26) qui forme le contour de boîtier correspondant.

9. Agencement de filtre (10) selon la revendication 8, le composant de boîtier (19) comprenant une bande d'étanchéité (24) contre laquelle la section d'étanchéité (5C, 16B) est fixée.

10. Agencement de filtre (10) selon la revendication 8 ou 9, le boîtier de filtre (25) comprenant un autre composant de boîtier (20) ayant une autre bande d'étanchéité (22), la section d'étanchéité (5C, 16B) pouvant être insérée de façon étanche entre les bandes d'étanchéité (22, 24).

11. Agencement de filtre (10) selon l'une quelconque des revendications 8 à 10, l'élément d'engagement comprenant un crochet.
